# EUROPEAN PATENT APPLICATION

(11) **EP 1 543 728 A1**
(43) Date of publication of application: **22.06.2005**
(21) Application number: 04447283.5
(22) Date of filing: 17.12.2004
(51) Int. Cl.: A23D 7/00, A23D 9/00, A23L 1/05

(54) **Fatty thickening composition**

(30) Priority: 19.12.2003 EP 03447298
(71) Applicant: Vandemoortele Izegem naamloze vennootschap, 8870 Izegem (BE)
(72) Inventor: Flypo, John, 8870 Izegem (BE); De Laporte, André, 8870 Izegem (BE); Loosveld, Anne-Marie, 8870 Izegem (BE)
(74) Representative: Luys, Marie-José

(57) **Abstract**

The present invention relates to a solid fatty thickening composition suitable for thickening a fat based composition, the solid fatty thickening composition comprising a fat phase and optionally other non-fatty ingredients, in which the fat phase contains (a) between 15 wt. % and 45 wt. % of at least one hydrogenated fat, and (b) between 85 and 55 wt. % of at least one liquid oil. The hydrogenated fat is preferably a fat having an iodine value < 10, preferably < 5, more preferably 2, fully hydrogenated high erucic acid rapeseed oil being the most preferred hydrogenated fat.

## Description

The present invention relates to a solid fatty thickening composition suitable for thickening a fat based composition, the solid fatty thickening composition comprising a fat phase and optionally other non-fatty ingredients, according to the preamble of the first claim.

### Background of the invention.

EP-A-1.329.164 solves the problem of providing an aromatic semi-liquid mixture or paste suitable for direct use for example with toast. The paste is said to show reduced sogginess, improved storage stability, good plasticity and spreadability. The paste is an either fat continuous or bi-continuous water and oil emulsion, having the consistency of pesto. It contains 20-60 wt. % of a vegetable fat, obtained by blending a common vegetable oil with 0.5-10 wt. % of a fully saturated fat, preferably fully hydrogenated high erucic acid rapeseed oil. EP-A-1.329.164 discloses the use of fully hydrogenated high erucic acid rapeseed oil as the best source of fat crystals having a crystallisation form capable of imparting a high viscosity to an oily matrix in which these crystals are dispersed. It is generally accepted that due to the presence of such crystals not only the viscosity is increased, but also that the suspending properties of the mesh formed by these crystals are superior to the suspending properties imparted by other fat crystals at comparable concentrations. EP-A-1.329.164 does however not disclose the process according to which the blend of the oil and up to 10% fully hydrogenated fat is to be prepared, as it is assumed that this preparation is well known to those skilled in the art.

The process for preparing a fat blend is generally known in the art and usually consists of the steps of heating both an amount of hard fat and oil, blending fat and oil at a temperature above the melting point of the fat and thereafter cooling the blend sufficiently rapidly as to obtain fine fat crystals. Cooling may be effectuated using a scraped surface heat exchanger. The use of a scraped surface heat exchanger is mostly superfluous with fat blends that contain small concentrations of a hard fat in liquid oil, but is preferably used if the concentration of the hard fat in the liquid oil increases to above 2 wt. %.

W001/05256 relates to pourable or pumpable food suspensions of non-fatty particles in oil, having a solids content of between 15-55 wt. %, intended for use as a coating for snack food item. According to W001/05256 the improved stability is obtained by carefully controlling the size of the particles in the suspension, i.e. by using particles having a mean particle size of less than 100 micrometers, the d(0.5) value being less than 100 micrometers, the d(0.9) value being less than 300 micrometers. WO01/05256 does however not encompass the suspending of larger particles by small fat crystals. Where the coating is an oil-based suspension, it may contain hydrogenated vegetable oils, for example rapeseed oil. The process used to suspend the particles in a blend of oil and fully hydrogenated hard fat, follows the state of the art for preparing such blend.

In GB-A-1.040.056 a process for the preparation of a liquid shortening is disclosed suitable for use in the preparation of baked goods, for example cake. According to GB-A-1.040.056 two chilled, crystallised, semi-liquid products are mixed to obtain a final pourable product. One of the semi-liquid products contains a fluid blend of a first fraction of a hard fat in oil. According to GB-A-1.040.056 an improved control of the fluidity of the final product may be achieved, by separating the preparation of the fluid premix of the first fraction of the hard fat in oil, from the preparation of the suspension of other products in another part of the liquid oil.

US-A-5.985.350 discloses herbs or spices containing pourable fat compositions for use as ready-to-use sauce, which upon mixing with hot water based liquids do not show lumping or caking problems. The fat compositions contain 30-89 wt. % of a fat phase, the fat phase being a mixture containing 90-99.8 wt. % of a liquid oil, and preferably 1-5 wt. % of a hard fat component. Examples of suitable hard fats are hardened rapeseed oil, hardened sunflower seed oil, hardened soybean oil, hardened palm oil, hardened cotton seed oil or mixtures thereof, fully hydrogenated high erucic rapseed oil being particularly preferred. Preferred hard fats have an IV value of < 10, contain more than 40 wt. % of C20+ saturated fatty acids as they show optimum beta-prime tendency. The pourable fat composition is prepared by first heating the liquid oil to a temperature of about 70-85°C and adding any temperature resistant components to the hot oil. The hard fat component and any temperature sensitive components, for example etheric oil, are only added after the liquid oil mixture has cooled down, to guarantee formation of an optimum crystal network. Care has to be taken that the concentration of the hard fat in the fat phase remains below 10 wt. %, as above this concentration the miscibility of the fat composition with an aqueous phase becomes a problem. The above disclosed premixes are said to have a shelf life of at least 6 months.

The above discussed documents of the prior art all relate to thickened fatty blends, that have a thickening ingredient added to the blend in a molten or dissolved state.

There is however also a need for a thickening composition that can be used as such at room temperature and does not require heating to obtain a thickening effect.

### Brief description of the invention.

It is therefore an object of the present invention to provide a concentrated solid fatty thickening composition for thickening a fat based composition, which fatty thickening composition contains a high amount of a fatty thickening agent, in particular an amount of a hydrogenated fat and shows a good consistency so that the product may be handled and transported as a solid product, for example in the form of a hard block or rod or bar.

In particular it is an object of the present invention to provide a fatty thickening composition or half product, which contains the hydrogenated fat in a high concentration and which is suitable for further mixing with fat or oil or an oil based matrix containing solid or water based ingredients.

### Description of the invention.

The object of providing a concentrated solid fatty thickening agent for thickening a fat, is achieved with a solid fatty thickening composition showing the technical features of the first claim.

Thereto, the solid fatty thickening composition of this invention is characterised in that it contains an amount of a fat phase, which fat phase in turn comprises
(a) between 15 and 45 wt. %, preferably between 15 and 36 wt. % of at least one hydrogenated fat, and
(b) the remainder, i.c. between 85 and 55 wt. % being liquid oil.

The inventor has observed that a solid fatty thickening composition containing the above described ingredients in the given concentrations, shows good cohesion and may be shaped in the form of a block or bar or otherwise, with good consistency.

Within the scope of this invention it is preferred to have the at least one hydrogenated fat present in an amount which is at least 15 wt. %, more preferably at least 20 wt. %, even at least 25 wt. % of the total weight of the fat phase. The composition of this invention can contain these high concentrations of solid fat as it is not an end product, but a fatty thickening composition provided to be mixed with a further oil based mixture, to give a fatty thickened slurry. The slurry in turn can be used as a thickener for thickening pesto, to be added to a roux or another sauce basis or to a basis for preparing a bakery product. Below a concentration of 15 wt. % of the fully hydrogenated fat, the consistency of the fatty thickening composition decreases and risks to become insufficient. Within the scope of this invention it is preferred to have the fully hydrogenated fat present in an amount which is preferably less than 45 wt. %, preferably less than 36 wt. %, more preferably less than 30 wt. % of the total weight of the fat phase. Above a concentration of the fully hydrogenated fat of 36 wt. %, the cohesion of the premix increases, whereas with concentrations exceeding 45 wt. % the premix may even become brittle, its fitness for use in food applications seriously deteriorating.

Depending on the envisaged thickening effect, the degree of hydrogenation of the hydrogenated fat may vary from partly to fully hydrogenated, although the use of a fully hydrogenated fat is preferred. The use of partly hydrogenated fat will have the effect of decreasing the amount of solid fat crystals that impart the desired thickening effect, and increases the amount of undesirable trans-fatty acids.

Within the scope of this invention it is preferred that the hydrogenated fat is a fat having an iodine value of below 10, which corresponds to a fat that has been hydrogenated to a large extent. However, it is preferred to use hydrogenated fats having an iodine value which is below 5 as this corresponds to an even further, almost fully hydrogenated fat. More preferably, the hydrogenated fat has an iodine value of below 2 as this corresponds to the maximum degree of hydrogenation which in practise is attainable. Within the scope of this invention, the wording "fully hydrogenated fat" means a fat having an iodine value of below 10, preferably below 5, more preferably below 2.

The hydrogenated fat used in the fatty thickening composition of this invention may be any hydrogenated fat thought suitable by the person skilled in the art, but is preferably a hydrogenated oil. The hydrogenated fat may be a single fat or a blend of two or more hydrogenated fats. The hydrogenated oil may be obtained by hydrogenating any suitable oil known to the person skilled in the art, for example marine oils, fish oil, vegetable oils, refined vegetable oils or fractions of one or more of the afore mentioned oils. Suitable examples of vegetable and refined vegetable oils include cotton seed oil, corn oil, soy oil, or fractions thereof, high erucic acid rapeseed oil or a blend of two or more of these oils or fractions of these oils. The hydrogenated liquid oils which contain at least 15 wt. % with respect to the weight of the liquid oil of fatty acids having a carbon atom chain length in which the number of carbon atoms is > 18, in particular ≥ 22 are particularly preferred as they provide the optimum thickening. More preferred in the present invention are those hydrogenated oils having high concentrations of hydrogenated erucic acid, the so called high erucic acid rapeseed oil, or oils which virtually exclusively consist of high erucic acid rapeseed oil, since this particular oil has been found to provide optimum thickening. High erucic acid rapeseed oil may for example contain at least 15 wt. %, preferably at least 25 wt. % of erucic acid. Nevertheless, hydrogenated fish oil is also an example of a suitable oil as it contains approximately 15 wt. % of fatty acids with chain length > 18. The inventors believe that the hydrogenated high erucic acid rapeseed oil, which contain high amounts of C22 saturated fatty acid, crystallises in the form of needle shaped crystals which are stable in the β' crystal form with virtually no risk to re-crystallisation to the β crystal form. Re-crystallisation is unwanted as it may introduce brittleness to the product. The inventors have observed that with a hydrogenated oil crystallising as β' crystals the degree of thickening imparted by the premix to an oil continuous composition remains virtually constant in time. The inventors believe that this phenomenon may be explained by the finding that β' crystals show an elongated shape with an onguent-like consistency and high Van Der Waals interaction and attraction forces. As a consequence of this Van Der Waals interaction the β' crystals are capable of imparting a higher viscosity and gel-like properties as compared to the β form when dispersed in oil.

The concentration of the fat phase within the solid fatty thickening composition may vary within wide ranges, in the sense that the solid fatty thickening composition may either exclusively consist of the fatty thickening agent and a liquid oil, or may also contain an amount of non-fat ingredients. However, the fat phase will usually amount to at least 60 wt. %, preferably at least 75 wt. % of the solid fatty thickening composition and up to 40 wt. %, preferably up to 20 wt. % of non-fat ingredients. This high concentration of fully hydrogenated fat in the fatty thickening composition is desired as the fatty thickening composition of this invention is not considered to be an end product, but rather a thickening agent to be mixed with, and to thicken a further oil based slurry. A fatty thickening composition with the above-described composition is suitable for being handled as a solid composition, packed in a wrapper or in the form of a rod or any other handle shape known to the person skilled in the art, and is sufficiently solid and coherent to be presented in the form of a stable dispersion of non-fatty material in a fatty matrix.

Examples of non-fat ingredients include powders for example spices, colorants, flavours, herbs, minerals, a solid bread improving composition and any other components considered suitable by the person skilled in the art.

The limited amount of liquid oil present in the solid fatty thickening composition of this invention presents a number of advantages which give the fatty thickening composition its economical feasibility:
- handling and transport of the fatty thickening composition are facilitated as the composition is a solid product with an increased concentration of the essential ingredients (i.e. thickening agent and if so desired any non-fat ingredients),
- the fatty thickening composition is suitable for direct mixing at room temperature as a solid product with an oil phase and other ingredients to result in a thickened final oil based composition or slurry
- the fatty thickening composition can be produced and transported independently of the logistics of the preparation of any end product into which the fatty thickening composition is to be incorporated.

The above described solid fatty thickening composition, which may be available in the form of a block or bar or otherwise shaped, may be stored at ambient temperature or at lower temperature. In that way the fatty thickening composition remains in its solid form available for direct blending with the oil based composition to be thickened. The virtually solid block or bar appears to be suitable for mixing into coarse dispersions of powders or other desired ingredients, herbs, sugar, enzymes or even water based components in an oil matrix.

The fatty thickening composition of the present invention has further been found to show an improved shelf life, in particular when containing one ore more active ingredients that are sensitive to oxidation or hydrolysis. It is believed that ingredients which are sensible to oxidation, for example enzymes, carbohydrates or other bio-degradable ingredients, are protected against oxidation or hydrolyses by the environmental atmosphere as they are coated with oil or fat. This has the consequence that there is no need to add a stabilising agent for any enzymes contained in the fatty thickening composition of this invention, and that the enzyme may be incorporated therein in its active form.

The present invention also relates to a fatty thickened slurry comprising a dispersion of 2-30 wt. % of the above-described solid fatty thickening composition, in 98-70 wt. % of an oil-continuous fluid containing at least one second oil. Preferably however the ratio between the oil-continuous fluid to be thickened and the fatty thickening composition of this invention is between 5 and 15. The fatty thickened slurry may further contain an amount of at least one ingredient selected from a fatty, a non-fatty ingredient or a mixture thereof, and may for example contain one or more aqueous thickening agents, spices, enzymes, preservatives, etc.

The second oil may be any oil thought suitable by the person skilled in the art. Suitable examples of vegetable and refined vegetable oils include rapeseed oil, sunflowerseed oil, palm oil, cotton seed oil, corn oil, soy oil, or fractions thereof, or a blend of two or more of these oils or fractions of these oils.

The inventors have namely found that the fatty thickening composition of the present invention as such is a product which is particularly suitable for thickening an oil continuous composition. Thereby the thickening effect may be achieved by using the fatty thickening composition as such, in the solid state at ambient temperature, i.e. the temperature at which the composition is stored, without the need to involve a heating step. The thickening effect may be achieved by blending the fatty thickening composition of this invention with the oil continuous composition under vigorous only. The absence of the need to apply a heating step is in particular important in case the fatty thickening composition contains temperature sensitive active ingredients and there is a need to minimise the risk to de-activation thereof. The result of such blending is a thickened, virtually homogenous oil-based mixture, which shows a minimum risk to sedimentation of the ingredients, the constitution and properties of which are comparable to or similar to a freshly prepared blend containing the same ingredients in the same concentrations, at similar concentrations of fully hydrogenated fat, but mixed all together at once as was previously done in the state of the art. This is surprising. According to the state of the art, thickening of an oil continuous composition is usually done by homogeneously dispersing an amount of a molten fatty thickening composition in the oil continuous composition, after which the dispersion is cooled and let to crystallise to thicken. The inventors have now found with the present invention that there is no need to melt the fatty thickening composition before mixing it with the oil continuous composition that needs thickening, but that the fatty thickening composition of the present invention is capable of imparting similar flow properties or a similar thickening to a composition, when blended or mixed in the solid state, with vigorous stirring. This means in fact that although the fatty thickening composition is added as a solid product, a good distribution and dispersion of the fatty thickening agent in the oil based slurry may be obtained. Thereby obtainable dispersion of the hydrogenated fat over the final composition is such that a sufficient thickening, cohesion and consistency is imparted to the final composition.

The present invention offers the advantage that the solid fatty thickening composition must not be exclusively fat based, but may besides the above described fat components, contain other non-fatty material. The present invention thus provides a concentrated solid premix, which may contain one or more active ingredients if so desired in high concentration, which is easy to handle, easy to transport, readily available and suitable for further processing.

A further advantage of the present invention is that only a relatively small amount of liquid oil is to be incorporated in the fatty thickening composition. In that way handling and transport of the fatty thickening composition are simplified and become economically feasible. The presence of a limited amount of oil has the result that a larger amount of oil may be incorporated in the oil-continuous composition with which the fatty thickening composition is to be blended. A large amount of oil may be advantageous for example in case it is envisaged to suspend any other particles into the oil-continuous composition. With the present invention for example up to 51 parts of fine powder such as flour or starch may be dispersed in 41 parts oil under vigorous mixing speeds followed by moderate mixing-in of 8 parts of fatty thickening composition (containing 25 wt. % hydrogenated fat), resulting in the presence of 2 wt. % of hydrogenated high erucic rapeseed oil and 51 wt. % of powder on final product.

The solid fatty thickening composition of this invention may be produced using standard techniques for cooling and packing fats (such as bars of frying fats).

The present invention also relates to a fatty thickened slurry containing an amount of the above described oil-based fatty thickening composition, which contains a dispersion of the solid fatty thickening composition described above in an oil-continuous fluid containing at least one oil. Usually the amount of fatty thickening composition added to a composition that needs thickening, is at least 2 parts preferably at least 5 parts, and less than 30 parts

The present invention further relates to a method for preparing a fatty thickened oil based slurry using the above described solid fatty thickening composition. The method of this invention comprises the steps of mixing and stirring 5 - 15 parts of at least one second liquid oil with 1 part of a solid fatty thickening composition comprising a fat phase containing (a) between 15 wt. % and 45 wt. % of at least one hydrogenated fat, and (b) between 85 and 55 wt. % of at least one liquid oil at a temperature below the melting point of the at least one hydrogenated fat, but preferably at ambient temperature. With ambient temperature is meant the temperature at which the fatty thickening composition is stored. This may be a rather low temperature of for example a few degrees C, but also a higher temperature of 20°C or even more. To ensure optimum mixing and optimum thickening, preferably the mixture is vigorously stirred, although care should be taken that the temperature of the mixture does not rise more than 8°, in particular that the temperature of the mixture does not raise to a temperature which is above 25°C - 30°C depending on the amount of fatty thickening composition. The thus obtained fatty thickened slurry has essentially the same thickness and suspending properties as a freshly prepared and cooled mixture of the same final composition.

The current invention allows substitution of the 'second oil' by a coarse suspension of any powder in such second oil, effectively using the fatty thickening composition as a thickener for its stabilisation against sedimentation and oiling-out. Use of a concentrated fatty thickening composition maximises the available amount of secondary oil in the over-all formula, effectively increasing the maximal attainable total fraction of dispersed material. It also simplifies the logistics of preparing thickened slurries as described above, and is suitable for dispersing heat-sensitive materials in such slurry.

The time during which the fatty thickening composition is stirred in the blend is not critical to the invention. It is however advisable to have the stirring time not too long in view of minimising the risk to flocculation around the non-fatty dispersed particles as this may adversely affect the thickness of the final composition. In this respect it is also advisable to control the stirring intensity and to have it sufficiently vigorous but not too vigorous. A preferred intensity and duration at stirring results in an increase of temperature of 2 to 5 degrees centigrade due to the heat equivalence of mechanical work.

The fatty thickening composition may be produced by blending the fully hydrogenated fat, also called fatty thickening agent, with liquid oil at a temperature above the melting point of the fully hydrogenated fat, and cooling and working them on a scraped surface heat exchanger in a way similar to the production of margarine of frying fat bars. The fatty thickened composition may be mixed with a further active ingredient upon use, in particular in case the further active ingredient is temperature sensitive, for example enzymes. The present invention also envisages the possibility of incorporating an especially heat sensitive component into the fatty thickening composition by working the component into the fatty thickening composition by mechanically kneading at low temperature, reforming the blocks or bars, for instance with an extruder, and repackaging them.

The present invention also relates to suspensions and dispersions of fatty or non-fatty ingredients in the above describes slurries. It also relates to non-food uses of said fat-continuous dispersions of active components.

The present invention further relates to an end product or a thickened composition containing
a) a liquid, which may be a water based liquid, for example a water continuous liquid,
b) the above described fatty thickened slurry,
for example for the preparation of a roux, sauce basis, pesto or a bakery product containing the above described fatty thickened slurry. The fatty thickening composition of the present invention is suitable for use as a dough ingredient (for example a liquid dough improver), or any other cooking ingredient which may be supplied in concentrated form for further processing.

Preferred embodiments of this invention are further disclosed in the appending claims and the examples given below.

### Example 1: Preparation of the fatty thickening composition

25 parts of fully hydrogenated high erucic acid rapeseed oil and 75 parts of rapeseed oil were heated to 75°C until the fully hydrogenated high erucic acid rapeseed oil was molten, and then blended. The blend was cooled on a scraped surface heat exchanger, formed into a solid block and packed.

### Example 2: Preparation of a fatty thickened slurry without non-fatty ingredients.

16 parts of the solid fatty thickening composition prepared according to example 1 were blended with 84 parts of refined vegetable oil under vigorous stirring in a Stephan mixer for 5 minutes at 1700 rpm.

### Example 3: Preparation of a fatty thickened slurry containing non-fatty ingredients: liquid roux.

To a Scanima mixing machine, with a liftable rotor-stator turbo mixer in combination with a scraper the following products are added: 43.975 parts by weight of refined, liquid sunflower vegetable oil, 2 parts of citric acid esters, 0.025 parts of soylecithin and 48 parts of a hydrophilic thickening agent for thickening an aqueous phase, consisting of starch, modified starch and hydrocolloids. Mixing is carried out under heavy stirring during 60 sec under saturated nitrogen atmosphere with the stator up, so as to introduce gas bubbles in the suspension. Stirring is continued until a homogeneous suspension of the powder in the oil is obtained.

To thus obtained mixture is mixed with 6 parts of the fatty thickening composition prepared according to example 1 under gently stirring during 3 minutes at a mixing speed of 2.75 under saturated nitrogen atmosphere, with the stator up.

Thereafter, the mixture is further stirred for 50 seconds at high shear, speed of 6, under saturated nitrogen atmosphere, with the stator down. Thereby, fine gas bubbles are divided over the mixture to render the product less sensitive to oiling out, to obtain a less fatty look and a somewhat whiter product and to improve the oxidation stability of the product. The obtained product can be described as a liquid roux and can be used as a base for thickening soups and sauces.

### Example 4: preparation of a fatty thickened slurry containing non-fatty ingredients : a liquid bread improver.

10 parts of a powdered bread improver containing the usual enzymes, ascorbic acid, emulsifiers are blended with 72 parts of refined vegetable oil and 18 parts of the fatty thickening composition of example 1 while mixing at a rotation speed of at least 100 rpm.

## Claims

1. A solid fatty thickening composition suitable for thickening a fat based composition, the solid fatty thickening composition comprising a fat phase and optionally other non-fatty ingredients, **characterised in that** the fat phase contains (a) between 15 wt. % and 45 wt. % of at least one hydrogenated fat, and (b) between 85 and 55 wt. % of at least one liquid oil.

2. A solid fatty thickening composition as claimed in claim 1, **characterised in that** the fat phase contains at least 15 wt. %, preferably at least 20 wt. %, more preferably at least 25 wt. % of the at least one hydrogenated fat.

3. A solid fatty thickening composition as claimed in claim 1 or 2, **characterised in that** the fat phase contains less than 45 wt. %, preferably less than 36 wt. %, more preferably less than 30 wt. % of the at least one hydrogenated fat.

4. A solid fatty thickening composition as claimed in any one of claims 1-3, **characterised in that** at least one hydrogenated fat is a fully hydrogenated fat.

5. A solid fatty thickening composition as claimed in claim 4, **characterised in that** the hydrogenated fat is a fat having an iodine value < 10, preferably < 5, more preferably < 2.

6. A solid fatty thickening composition as claimed in any one of claims 1-5, **characterised in that** the hydrogenated fat is a hydrogenated oil, which contains at least 15 wt. % of fatty acids having a carbon atom chain length in which the number of carbon atoms is > 18, preferably ≥ 22.

7. A solid fatty thickening composition as claimed in any one of claims 1-6, **characterised in that** the hydrogenated fat is selected from the group of hydrogenated marine oils, hydrogenated vegetable oils, hydrogenated refined vegetable oils and a blend of two or more of the afore mentioned oils.

8. A solid fatty thickening composition as claimed in any one of claims 1-7, **characterised in that** the hydrogenated fat is a hydrogenated high erucic acid rapeseed oil.

9. A solid fatty thickening composition as claimed in any one of claims 1-9, **characterised in that** the composition contains an amount of non-fat ingredients, the amount of non-fat ingredients being ≤ 40 wt. % with respect to the total weight of the solid fatty thickening composition, preferably ≤ 20 wt. %.

10. A solid fatty thickening composition as claimed in any one of claims 1-9, **characterised in that** the solid fatty thickening composition contains an amount of a heat sensitive component, in particular at least one enzyme.

11. A solid fatty thickening composition as claimed in any one of claims 1-10, **characterised in that** the premix takes the form of a solid block, bar or rod.

12. A fatty thickened slurry, comprising a dispersion of 2-30 wt. % of the solid fatty thickening composition of any one of claims 1-11 in 98-70 wt. % of an oil-continuous fluid containing at least one oil.

13. A fatty thickened slurry as claimed in claim 12, **characterised in that** the ratio between the weight of the oil-continuous fluid to be thickened and the fatty thickening composition of this invention is between 5 and 15.

14. A fatty thickened slurry as claimed in claim 12 or 13, **characterised in that** it further contains an amount of at least one ingredient selected from a fatty, a non-fatty ingredient or a mixture thereof.

15. A thickened composition comprising an amount of a liquid and an amount of the fatty thickened slurry of any one of claims 12-14.

16. A process of preparing a fatty thickened slurry, **characterised in that** the process comprises the steps of mixing and stirring 2-30 wt. % of the solid fatty thickening composition as claimed in any one of claims 1-11 with 98-70 wt. % of at least one liquid oil, the solid fatty thickening composition comprising a fat phase containing (a) between 15 wt. % and 45 wt. % of at least one hydrogenated fat, and (b) between 85 and 55 wt. % of at least one liquid oil, at ambient temperature.

17. A process as claimed in claim 16, **characterised in that** 5 - 15 parts of liquid oil are mixed with 1 part of the fatty thickening composition of any one of claims 1-11.

18. A process as claimed in claim 16 or 17, **characterised in that** the stirring is carried out in such a way that the temperature increase of the mixture in the course of stirring is smaller than 8°C.
